# EUROPÄISCHE PATENTANMELDUNG

(11) **EP 0 700 223 A2**
(43) Veröffentlichungstag der Anmeldung: **06.03.1996**
(21) Anmeldenummer: 95202201.0
(22) Anmeldetag: 14.08.1995
(51) Int. Cl.: H04Q 3/545

(54) **Kommunikationssystem**

(30) Priorität: 31.08.1994 DE 4430876
(71) Anmelder: Philips Patentverwaltung GmbH, D-22335 Hamburg (DE); Philips Electronics N.V., NL-5621 BA Eindhoven (NL)
(72) Erfinder: Tjabben, Hermann, c/o Philips, D-22335 Hamburg (DE); Abramowski, Stephan, Dr., c/o Philips, D-22335 Hamburg (DE); Lelkens, Armand, M. M., Dr., c/o Philips, D-22335 Hamburg (DE)
(74) Vertreter: Volmer, Georg, Dipl.-Ing.

(57) **Zusammenfassung**

Die Erfindung bezieht sich auf ein Kommunikationssystem mit einem Vermittlungssystem (1), das ein Koppelfeld (2) und eine Steuerschaltung (4) enthält. Die Steuerschaltung (4) enthält eine sendeseitige Verbindungsbehandlungs-Prozedur (ASH) zur Verbindungsverwaltung und zum Austausch von Meldungen mit anderen Prozeduren und eine empfangsseitigen Verbindungsbehandlungs-Prozedur (BSH) zur Verbindungsverwaltung und zum Austausch von Meldungen mit anderen Prozeduren. Zur Bereitstellung von beliebigen externen Diensten ist das Koppelfeld (2) mit einem Dienststeuerungssystem (6) gekoppelt. Ferner enthält die Steuerschaltung (4) eine Zusatz-Prozedur (ZUSA) zum alleinigen Austausch von Meldungen mit der sendeseitigen und der empfangsseitigen Verbindungsbehandlungs-Prozedur (ASH, BSH). Die Zusatz-Prozedur (ZUSA) ist bei bestimmten Meldungen zum Austausch von Meldungen mit einem Dienstlogikprogramm (SERV) des Dienststeuerungssystems (6) und in Abhängigkeit der vom Dienstlogikprogramm (SERV) abgegebenen Meldungen zur Ausgabe von Meldungen zur sende- und/oder empfangsseitigen Verbindungsbehandlungs-Prozedur (ASH, BSH) vorgesehen.

## Beschreibung

Die Erfindung bezieht sich auf ein Kommunikationssystem mit einem Vermittlungssystem, das ein Koppelfeld und eine Steuerschaltung enthält mit
- einer sendeseitigen Verbindungsbehandlungs-Prozedur zur Verbindungsverwaltung und zum Austausch von Meldungen mit anderen Prozeduren und
- einer empfangsseitigen Verbindungsbehandlungs-Prozedur zur Verbindungsverwaltung und zum Austausch von Meldungen mit anderen Prozeduren.

Ein solches Kommunikationssystem ist aus dem Dokument "Hardware und Software des Dienstevermittlungssystems PAsst" von J. Friedrichs, H.-G. Hopf und M. Krekeler, PKI Tech. Mitt. 2/1989, Seiten 15 bis 23 bekannt. Dieses Kommunikationssystem besteht aus einem Vermittlungssystem mit einem Koppelfeld, mehreren mit dem Koppelfeld gekoppelte Peripherie-Gruppen und einer Steuerschaltung zur Steuerung des Koppelfeldes und der Peripherie-Gruppen. Die Steuerschaltung ist ein Multi-Netzwerkprozessor, der Kontroll-, Verwaltungs- und Steuervorgänge durchführt. Die Software der Steuerschaltung führt auch Vermittlungsfunktionen zwischen verschiedenen Teilnehmern oder anderen Vermittlungssystemen durch.

Das bekannte Vermittlungssystem ist nicht in der Lage, beliebige externe Dienste zu beanspruchen. Ein solcher Dienst ist beispielsweise ein Kreditkarten-Dienst (Credit Card Calling), der es dem Teilnehmer nach Wahl einer Dienstnummer und einer erfolgreichen Authentifizierung ermöglicht, beliebige Telefongespräche von dem benutzten Endgerät zu führen. Die Gesprächsgebühren werden anschließend von seinem Kreditkartenkonto abgebucht. Sowohl Authentifizierung als auch Abbuchung der Gebühren müssen in einer externen Komponente erfolgen, da die zur Ausführung des Dienstes erforderlichen Daten in der Regel nicht im Vermittlungssystem verfügbar sind.

Der Erfindung liegt daher die Aufgabe zugrunde, ein Vermittlungssystem zu schaffen, das auch die Anbindung von beliebigen externen Diensten ermöglicht.

Die Aufgabe wird bei einem Vermittlungssystem der eingangs genannten Art dadurch gelöst,
daß das Koppelfeld mit einem Dienststeuerungssystem gekoppelt ist,
daß die Steuerschaltung eine Zusatz-Prozedur zum alleinigen Austausch von Meldungen mit der sendeseitigen und der empfangsseitigen Verbindungsbehandlungs-Prozedur enthält und
daß die Zusatz-Prozedur bei bestimmten Meldungen zum Austausch von Meldungen mit einem Dienstlogikprogramm des Dienststeuerungssystems und in Abhängigkeit der vom Dienstlogikprogramm abgegebenen Meldungen zur Ausgabe von Meldungen zur sende- und/oder empfangsseitigen Verbindungsbehandlungs-Prozedur vorgesehen ist.

Bei dem erfindungsgemäßen Kommunikationssystem ist das Koppelfeld des Vermittlungssystems mit einem externen Dienststeuerungssystem gekoppelt. Eine solches Dienststeuerungssystem kann beispielsweise eine Dienststeuerungskomponente (Service Control Point) eines Intelligenten Netzes oder eine CSTA-Steuerungskomponente (Computer-Supported Telecommunication Application-Computing Function) sein. In einem solchen Dienststeuerungssystem stehen verschiedene Dienstlogikprogramme zur Verfügung. Damit das Vermittlungssystem ein solches Dienstlogikprogramm anfordern kann, ist die für die Vermittlungsfunktion zuständige Software um eine Zusatz-Prozedur erweitert worden. Diese Zusatz-Prozedur empfängt alle Meldungen von der sende- und empfangsseitigen Verbindungsbehandlungs-Prozedur, so daß ein Austausch von Meldungen zwischen den sende- und empfangsseitigen Verbindungsbehandlungs-Prozeduren nur über die Zusatz-Prozedur möglich ist. Aufgrund bestimmter Meldungen kann die Zusatz-Prozedur Meldungen an das Dienststeuerungssystem zum Aufruf oder zur Kommunikation mit einem Dienstlogikprogramm senden. Das Dienstlogikprogramm sendet bei bestimmten Meldungen eine Antwort an die Zusatz-Prozedur, aus denen die Zusatz-Prozedur Meldungen für die sende- und/oder empfangsseitige Verbindungsbehandlungs-Prozedur erzeugt.

Beispielsweise wird bei einem Dienstlogikprogramm zur Rufumschaltung nach Erhalt einer Besetzt-Meldung (Busy) von der empfangsseitigen Verbindungsbehandlungs-Prozedur, die über die Zusatz-Prozedur dem Dienstlogikprogramm übermittelt worden ist, eine Alternativ-Verbindung (Rufnummer) mitgeteilt. Die Zusatz-Prozedur versucht nach Empfang der Meldung eine neue Verbindung aufzubauen und sendet hierzu an die sende- und/oder empfangsseitige Verbindungsbehandlungs-Prozedur entsprechende Meldungen.

Mit der Erfindung wird ein allgemeine Prozedur für die Anbindung an beliebige externe Dienste ohne wesentliche Änderungen von existierenden Prozeduren der für die Vermittlungsfunktionen zuständigen Software ermöglicht. Die Zusatz-Prozedur wird zur bestehenden Software hinzugefügt und benötigt zur Kommunikation mit dem externen Dienststeuerungssystem wenigstens die Meldungen von der sende- und/oder empfangsseitigen Verbindungsbehandlungs-Prozedur.

Die Zusatz-Prozedur enthält jeweils eine sende- und empfangsseitige Zustands-Prozedur zur Ermittlung des Zustandes der sende- und empfangsseitigen Verbindungsbehandlungs-Prozedur anhand der empfangenen Meldungen. In den beiden Zustand-Prozeduren wird anhand der jeweiligen empfangenen Meldungen der Zustand in der sende- und empfangsseitigen Verbindungsbehandlungs-Prozedur vereinfacht nachgebildet. Hierdurch kann eine Zuordnung der verschiedenen Meldungen auf eine einfache Art in den Zustands-Prozeduren durchgeführt werden.

Ferner enthält die Zusatz-Prozedur eine Ereignisbehandlungs-Prozedur
- zum Empfang von jeweils einer Meldung einer sende- oder empfangsseitigen Verbindungsbehandlungs-Prozedur kennzeichnenden Ausstiegspunkten und
- zur Überprüfung, ob bei einem Ausstiegspunkt ein Meldungsaustausch mit einem Dienstlogikprogramm durchgeführt werden muß.

Die weiter in der Zusatz-Prozedur enthaltene Ereignisbehandlungs-Prozedur empfängt von den Zustands-Prozeduren einen Ausstiegspunkt zugeführt, der jeweils eine Meldung kennzeichnet. Es wird dann in der Ereignisbehandlungs-Prozedur geprüft, ob ein Dienstlogikprogramm angesprochen werden soll und ob Daten zum Dienstlogikprogramm gesendet werden sollen. Bestimmte Daten, die von dem das Dienstlogikprogramm verwaltenden Dienststeuerungssystem empfangen werden, dienen zur Information und andere Daten dienen dazu, eine Antwort für die Ereignisbehandlungs-Prozedur zu bilden. Die von dem Dienstlogikprogramm abgegebene Antwort wird in der Ereignisbehandlungs-Prozedur in eine Meldung für eine Zustands-Prozedur umgeformt. Gegebenenfalls werden diese Meldungen dann an wenigstens eine Verbindungsbehandlungs-Prozedur weitergegeben.

Die Erfindung bezieht sich auch auf ein Vermittlungssystem mit einem Koppelfeld und einer Steuerschaltung, die
- eine sendeseitige Verbindungsbehandlungs-Prozedur zur Verbindungsverwaltung und zum Austausch von Meldungen mit anderen Prozeduren und
- eine empfangsseitige Verbindungsbehandlungs-Prozedur zur Verbindungsverwaltung und zum Austausch von Meldungen mit anderen Prozeduren enthält.
Die Erfindung sieht vor, daß das Koppelfeld mit einem externen Dienststeuerungssystem gekoppelt ist,
daß die Steuerschaltung eine Zusatz-Prozedur zum alleinigen Austausch von Meldungen mit der sendeseitigen und der empfangsseitigen Verbindungsbehandlungs-Prozedur enthält und
daß die Zusatz-Prozedur bei bestimmten Meldungen zum Austausch von Meldungen mit einem Dienstlogikprogramm des Dienststeuerungssystems und in Abhängigkeit der vom Dienstlogikprogramm abgegebenen Meldungen zur Ausgabe von Meldungen zur sende- und/oder empfangsseitigen Verbindungsbehandlungs-Prozedur vorgesehen ist.

Ausführungsbeispiele der Erfindung werden nachstehend anhand der Zeichnungen näher erläutert. Es zeigen:
- Fig. 1: ein Blockschaltbild eines bekannten Kommunikationssystems mit einem Vermittlungssystem,
- Fig. 2: ein Blockschaltbild der für die Vermittlungsfunktionen des Vermittlungssystems nach Fig. 1 verwendeten Prozeduren,
- Fig. 3: ein Blockschaltbild eines Kommunikationssystems mit einem Vermittlungssystem und einem Dienststeuerungssystem,
- Fig. 4: ein Blockschaltbild der für die Vermittlungsfunktionen des Vermittlungssystems nach Fig. 3 verwendeten Prozeduren,
- Fig. 5: ein Zustandsmodell der in Fig. 4 gezeigten sendeseitigen Zustands-Prozedur,
- Fig. 6: ein Zustandsmodell der in Fig. 4 gezeigten empfangsseitigen Zustands-Prozedur,
- Fig. 7: ein Zustandsdiagramm der in Fig. 4 gezeigten Ereignisbehandlungs-Prozedur und
- Fig. 8: ein Diagramm mit den verschiedenen, in der Zusatz-Prozedur verwendeten Meldungen bei einem Telefongespräch ohne Gebührenberechnung.

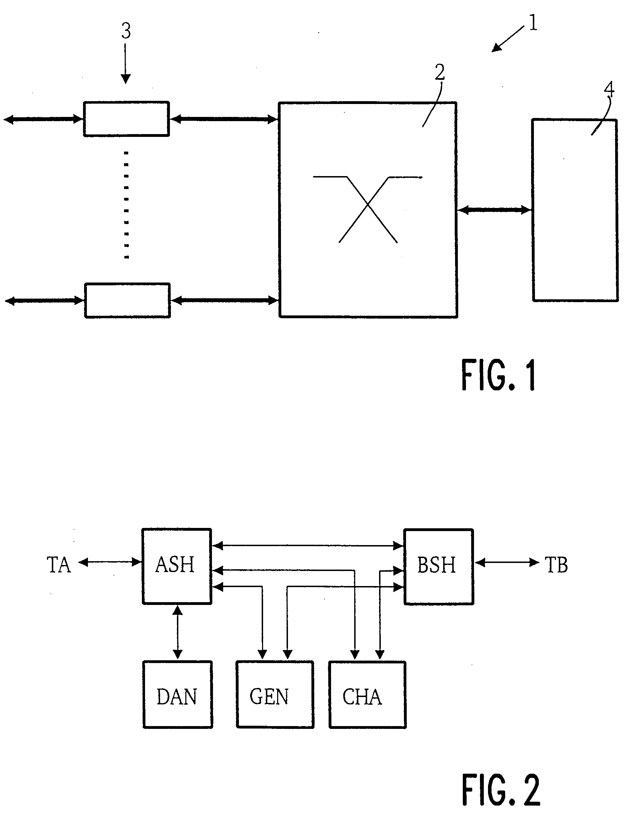

Das in Fig. 1 dargestellte bekannte Vermittlungssystem 1 enthält ein Koppelfeld 2, mehrere Peripherie-Gruppen 3, die einerseits mit verschiedenen analogen und/oder digitalen Teilnehmerleitungen und/oder weiteren Vermittlungssystemen und andererseits mit dem Koppelfeld 2 gekoppelt sind, und eine Steuerschaltung 4, die als Multi-Netzwerk-Prozessor ausgebildet ist. Eine solches Vermittlungssystem 1 ist beispielsweise aus dem Dokument "Hardware und Software des Dienstevermittlungssystems PAsst" von J. Friedrichs, H.-G. Hopf und M. Krekeler, PKI Tech. Mitt. 2/1989, Seiten 15 bis 23 bekannt. Die Steuerschaltung 4 führt Kontroll-, Verwaltungs- und Steuerungsvorgänge im Vermittlungssystem 1 durch.

Ein Teil der von der Steuerschaltung 4 verwendeten Software ist zur Steuerung der Verbindungsverwaltung (z.B. Verbindungsaufbau- und abbau, Ziffernanalyse, Gebührenerfassung) vorgesehen. Diese Vermittlungssoftware enthält verschiedene bekannte Prozeduren, die als Blockschaltbild schematisch in der Fig. 2 dargestellt sind. Eine Verbindungsbehandlungs-Prozedur ASH (A Signalling Handler) führt eine senderseitige (A-seitige) Verbindungsverwaltung mit einem Teilnehmer TA durch. Eine Verbindungsbehandlungs-Prozedur BSH (B Signalling Handler) ist zur empfängerseitigen Verbindungsverwaltung mit einem Teilnehmer TB vorgesehen. Als Teilnehmer TA oder TB kann anstelle eines Endgeräte-Teilnehmers auch ein weiteres Vermittlungssystem vorhanden sein. Eine weitere Prozedur DAN (Digit Analysis) führt eine Analyse der vom Teilnehmer TA eingegebenen Ziffern durch. Zur Gebührenerfassung dient die Prozedur CHA (Charging). Zur Überprüfung, ob ein Teilnehmer berechtigt ist, eine Verbindung aufzunehmen, dient eine Genehmigungs- oder Autorisierungs-Prozedur GEN. Ferner können noch für andere Überwachungsfunktionen weitere Prozeduren vorhanden sein.

Die Prozedur ASH, deren Funktion eine sendeseitige oder A-seitige Verbindungsverwaltung ist, gibt verschiedene Meldungen an die Prozeduren BSH, GEN, DAN und CHA ab. Eine Autorisierungs-Anfrage wird von der Prozedur ASH an die Prozedur GEN gesendet. Die Prozedur ASH erhält eine Autorisierungs-Meldung von der Prozedur GEN, wenn eine Verbindung erlaubt ist, die ein Teilnehmer TA haben möchte. Vor einem Gespräch signalisiert der Teilnehmer TA beispielsweise durch Abnehmen des Telefonhörers, daß er ein Gespräch führen möchte. Aufgrund der Autorisierungs-Meldung wird z.B. der Wählton aufgeschaltet.

Bei einer Zifferneingabe vom Teilnehmer TA wird jeweils eine Eingabe-Meldung zur Prozedur DAN weitergegeben, in der eine Ziffernanalyse durchgeführt wird. Ist der Teilnehmer TB, der angerufen werden soll, erkannt worden, wird eine Selektions-Meldung über die Prozedur ASH zur Prozedur BSH gesendet. Weiter wird von der Prozedur ASH ermittelt, ob eine Verbindungs-Meldung von der Prozedur BSH kommt. Wenn eine solche Verbindungs-Meldung kommt, wird eine Freigabe-Meldung von der Prozedur ASH erzeugt.

Wird von der Prozedur BSH jedoch gemeldet, daß ein Verbindungsfehler aufgetreten ist oder daß die B-Seite besetzt ist oder daß die B-Seite nicht antwortet, werden entsprechende Meldungen von der Prozedur ASH gebildet. Beispielsweise bei der Meldung, daß die B-Seite besetzt ist, wird z.B. in der entsprechenden Peripherie-Gruppe 3 ein Besetztzeichen erzeugt und dem Teilnehmer zugeführt.

Tritt ein Fehler auf, wird das Gespräch über eine Abbruch-Meldung der Prozedur ASH beendet. Wenn der Teilnehmer TA das Gespräch beendet (Telefonhörer auflegen) wird eine Trennungs-Meldung (Disconnect) von der Prozedur ASH erzeugt. Während einer Verbindung können weitere Meldungen bei bestimmten Verbindungsereignissen von der Prozedur ASH erzeugt werden. In diesem Fall wird eine Ereignis-Meldung von der Prozedur ASH ausgegeben. Beispielsweise wird eine Umschalt-Meldung erzeugt, wenn kurzzeitig eine Verbindung mit einem weiteren Teilnehmer hergestellt werden soll.

Die Prozedur BSH, die zur empfängerseitigen oder B-seitigen Verbindungsverwaltung mit dem Teilnehmer TB vorgesehen ist, erzeugt ebenfalls Meldungen. Eine Autorisierungs-Meldung kann die Prozedur BSH aufgrund einer Autorisierungs-Anfrage von der Prozedur GEN erhalten, wenn eine Verbindung erlaubt ist. Ist dies der Fall, wird z.B. der Wählton beim Teilnehmer TB aufgeschaltet. Ist die B-Seite besetzt, wird eine entsprechende Meldung erzeugt. Antwortet die B-Seite nicht, wird nach einer vorgegebenen Zeit eine entsprechende Meldung gebildet. Falls der Teilnehmer TB antwortet, wird eine Antwort-Meldung von der Prozedur BSH ausgegeben. In allen anderen Fällen wird eine Abbruch-Meldung erzeugt. Bei einer Verbindung werden bei bestimmten Verbindungsereignissen (z.B. Umschalten) Ereignismeldungen von der Prozedur BSH abgegeben. Bei einer Beendigung des Gespräches durch den Teilnehmer TB wird ebenfalls wie bei der Prozedur ASH von der Prozedur BSH eine Trennungs-Meldung (Disconnect) ausgegeben.

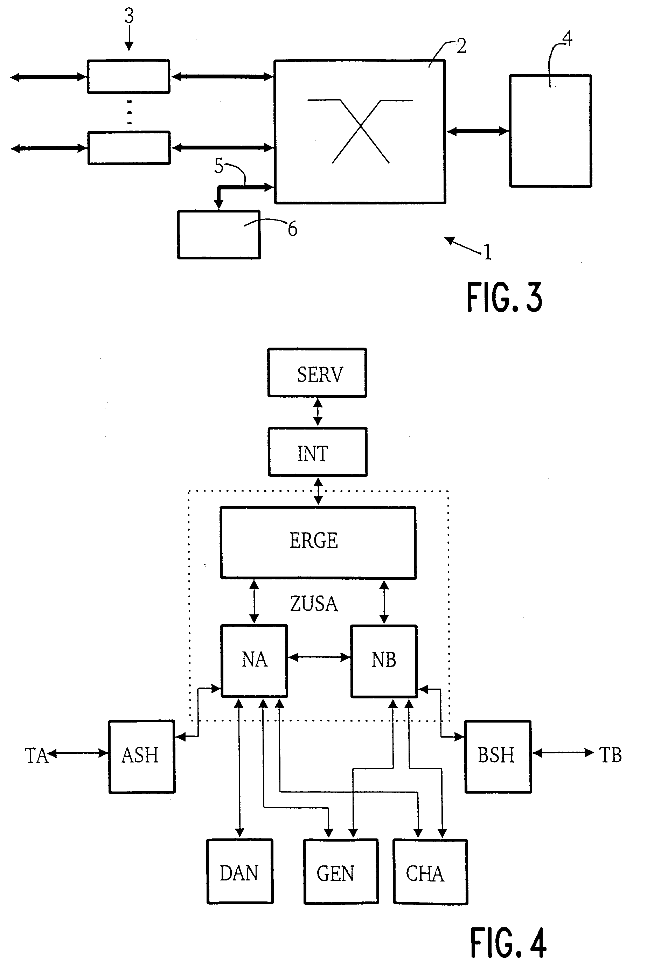

Um nicht im Vermittlungssystem 1 gehaltene Dienste den Teilnehmern zur Verfügung zu stellen, ist das in Fig. 1 dargestellte bekannte Vermittlungssystem 1 durch weitere Komponenten erweitert worden. Außer dem Koppelfeld 2, den Peripherie-Gruppen 3 und der Steuerschaltung 4 ist, wie in Fig. 3 gezeigt, an das Koppelfeld 2 über eine Schnittstelle 5 ein externes Dienststeuerungssystem 6 angeschlossen. Die Schnittstelle 5 kann z.B. vom Typ X.21 sein. Das Dienststeuerungssystem 6 kann z.B. eine Dienststeuerungskomponente (Service Control Point) eines Intelligenten Netzes oder eine CSTA-Steuerungskomponente (Computer-Supported Telecommunication Application-Computing Function) sein.

Zur Steuerung der Vermittlungsvorgänge mit dem Dienststeuerungssystem 6 sind die aus der Fig. 2 bekannten Prozeduren um weitere Prozeduren erweitert worden. Ein Blockschaltbild der verschiedenen Prozeduren ist schematisch in Fig. 4 dargestellt. Meldungen die von der Verbindungsbehandlungs-Prozedur ASH erzeugt werden, werden einer Zustands-Prozedur NA zugeführt, welche Teil einer Zusatz-Prozedur ZUSA ist und welche die wesentlichen Zustände der Prozedur ASH über deren Meldungen erfaßt. Außerdem sendet die Prozedur NA alle der Prozedur ASH zuzuführenden Meldungen. Eine Zustands-Prozedur NB, die ebenfalls ein Teil der Zusatz-Prozedur ZUSA ist, erfaßt die wesentlichen Zustände der Prozedur BSH.

Weiter ist die Prozedur NB zum Austausch von Meldungen mit der Prozedur BSH vorgesehen. Ferner werden zwischen den beiden Prozeduren NA und NB Meldungen übermittelt.

Die Prozedur DAN zur Ziffernanalyse tauscht über die Prozedur NA Meldungen mit der Prozedur ASH aus. Meldungen zur Gebührenerfassung und Autorisierungs-Anfragen bzw. Meldungen werden zwischen den Prozeduren CHA bzw. GEN und ASH und/oder BSH über die Prozeduren NA und NB ausgetauscht. Weitere Prozeduren ERGE und INT steuern den Austausch von Meldungen zwischen dem Vermittlungsystem und dem Dienststeuerungssystem 5. Die Prozedur ERGE ist auch ein Bestandteil der übergeordneten Prozedur ZUSA.

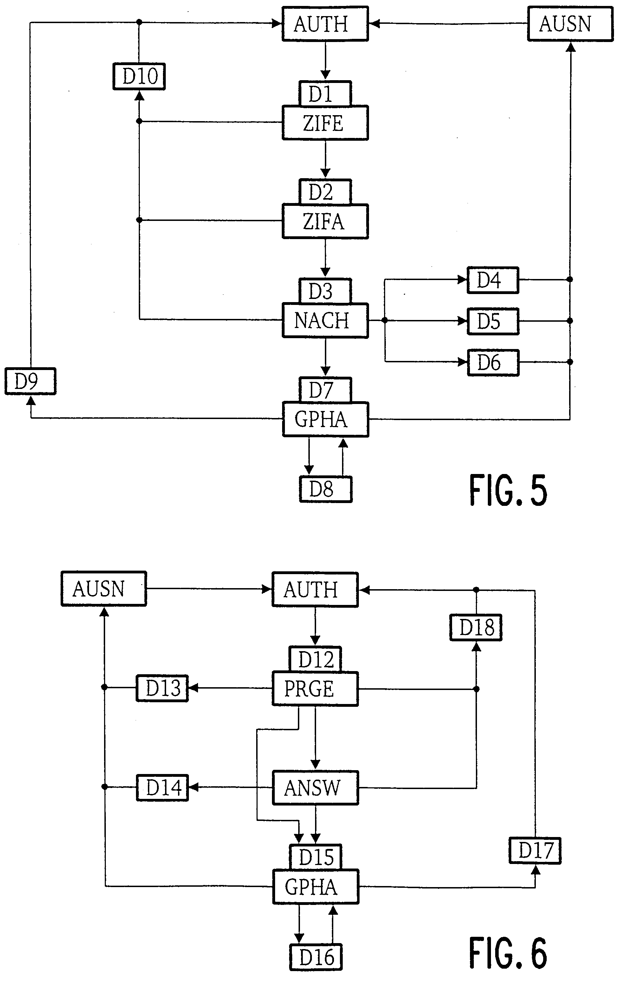

Zur Ermittlung des Zustandes in den Verbindungsbehandlungs-Prozeduren ASH und BSH wird in den Zustands-Prozeduren NA und NB ein Zustandsmodell (Basic Call State Model) verwendet. Das in der Fig. 5 gezeigte Zustandsmodell erfaßt die wesentlichen Zustande oder Phasen in der Prozedur ASH. Vor einer Verbindung wird von der Prozedur ASH eine Autorisierungs-Anfrage an die Prozedur GEN gesendet. Der in der Fig. 5 gezeigte Zustand AUTH gibt den Wartevorgang auf die Autorisierungs-Meldung von der Prozedur GEN an. Ist eine solche Verbindung erlaubt, empfängt die Prozedur ASH die Autorisierungs-Meldung. Aufgrund der Autorisierungs-Meldung wird z.B. der Wählton aufgeschaltet. In dem Zustandsmodell der Fig. 5 werden Ausstiegspunkte (Detection Points) erreicht, wenn Meldungen zur Prozedur ASH gesendet oder von der Prozedur ASH empfangen werden. Die Autorisierungs-Meldung ist durch den Ausstiegspunkt D1 gekennzeichnet. Im nächsten Zustand ZIFE wird die Zifferneingabe vom Teilnehmer TA jeweils als eine Eingabe-Meldung (Ausstiegspunkt D2) zur Prozedur DAN weitergegeben, in der eine Ziffernanalyse durchgeführt wird. Dieser Zustand ist als ZIFA gekennzeichnet. Ist der Teilnehmer TB, der angerufen werden soll, erkannt worden, wird eine Selektions-Meldung (Ausstiegspunkt D3) zur Prozedur BSH gesendet. Während des Zustandes NACH wird von der Prozedur ASH ermittelt, ob eine Verbindungs-Meldung von der Prozedur BSH kommt. Wenn eine solche Verbindungs-Meldung kommt, wird eine Freigabe-Meldung (Ausstiegspunkt D7) von der Prozedur ASH erzeugt, und es wird in den Zustand GPHA gewechselt. Der Zustand GPHA gibt die Verbindungsphase an.

Wird von der Prozedur BSH jedoch gemeldet, daß ein Verbindungsfehler aufgetreten ist oder daß die B-Seite besetzt ist oder daß die B-Seite nicht antwortet, werden entsprechende Meldungen (Ausstiegspunkte D4, D5 und D6) von der Prozedur ASH gebildet und in den Ausnahme-Zustand AUSN gewechselt. Beispielsweise bei der Meldung, daß die B-Seite besetzt ist, wird z.B. in der entsprechenden Peripherie-Gruppe 3 ein Besetztzeichen erzeugt und dem Teilnehmer zugeführt. Wenn der Teilnehmer TA den Telefonhörer aufgelegt hat (Ausstiegspunkt D9), kann wieder ein neues Gespräch in dem Zustand AUTH begonnen werden.

Tritt ein Fehler während der Zustände ZIFE, ZIFA oder NACH auf, wird das Gespräch über eine Abbruch-Meldung (Ausstiegspunkt D10) der Prozedur ASH beendet. Wenn der Teilnehmer TA oder der Teilnehmer TB das Gespräch im Zustand GPHA beendet (Telefonhörer auflegen) wird eine Trennungs-Meldung (Disconnect; Ausstiegspunkt D9) von der Prozedur ASH erzeugt. Während einer Gesprächsphase im Zustand GPHA können weitere Meldungen bei bestimmten Gesprächsereignissen von der Prozedur ASH erzeugt werden. In diesem Fall wird eine Ereignis-Meldung (Ausstiegspunkt D8) von der Prozedur ASH ausgegeben. Beispielsweise wird eine Umschalt-Meldung erzeugt, wenn kurzzeitig eine Verbindung mit einem weiteren Teilnehmer hergestellt werden soll.

In der Fig. 6 ist das Zustandsmodell dargestellt, welches die wesentlichen Zustände in der Prozedur BSH erfaßt. Vor einer Verbindung wird von der Prozedur BSH in dem Zustand oder der Phase AUTH auf eine Autorisierungs-Meldung (Ausstiegspunkt D12) von der Prozedur GEN gewartet. Die Prozedur GEN prüft nach einer Autorisierungs-Anfrage, z.B. anhand von gespeicherten Daten, ob eine Verbindung erlaubt ist. Nach Empfang einer Autorisierungs-Meldung wird z.B. der Wählton beim Teilnehmer TB aufgeschaltet. Im Zustand PRGE wird geprüft, ob die B-Seite (Empfängerseite) besetzt ist und ob ein Teilnehmer ausgewählt werden kann. Ist die B-Seite besetzt, wird eine entsprechende Meldung (Ausstiegspunkt D13) erzeugt. Antwortet die B-Seite nicht, wird in einen Wartezustand ANSW gewechselt und nach einer vorgegebenen Zeit eine entsprechende Meldung (Ausstiegspunkt D14) gebildet. Falls der Teilnehmer TB antwortet, wird eine Antwort-Meldung (Ausstiegspunkt D15) von der Prozedur BSH ausgegeben. In allen anderen Fällen wird eine Abbruch-Meldung (Ausstiegspunkt D18) erzeugt. Nach der Antwort-Meldung wird in den Zustand GPHA gesprungen der die Verbindungsphase angibt. Die Verbindungsphase kann bei bestimmten Ereignissen kurzzeitig verlassen werden. In diesem Fall wird eine Ereignis-Meldung (Ausstiegspunkt D16) von der Prozedur BSH geliefert. Tritt ein Fehler während der Gesprächsphase auf, wird in den Ausnahmezustand AUSN gewechselt. Bei einer Beendigung des Gespräches durch den Teilnehmer TB wird ebenfalls wie bei der Prozedur ASH von der Prozedur BSH eine Trennungs-Meldung (Disconnect; Ausstiegspunkt D17) ausgegeben.

Werden in den Prozeduren ASH bzw. BSH andere Meldungen abgegeben, kann ein anderes Zustandsmodell zugrundegelegt werden. Das oben beschriebene Zustandsmodell kann bei Bedarf auch durch weitere Ausstiegspunkte für weitere Meldungen ergänzt werden.

Ein Erreichen eines Ausstiegspunktes wird von den Prozeduren NA und NB der Ereignisbehandlungs-Prozedur ERGE mitgeteilt, die eine Ereignisbehandlung (Event Handler) durchführt. Die Prozedur ERGE unterscheidet dabei auch die Herkunft der Meldungen. Das bedeutet, daß Meldungen von den Prozeduren NA und NB jeweils als getrennte Ereignisse verarbeitet werden.

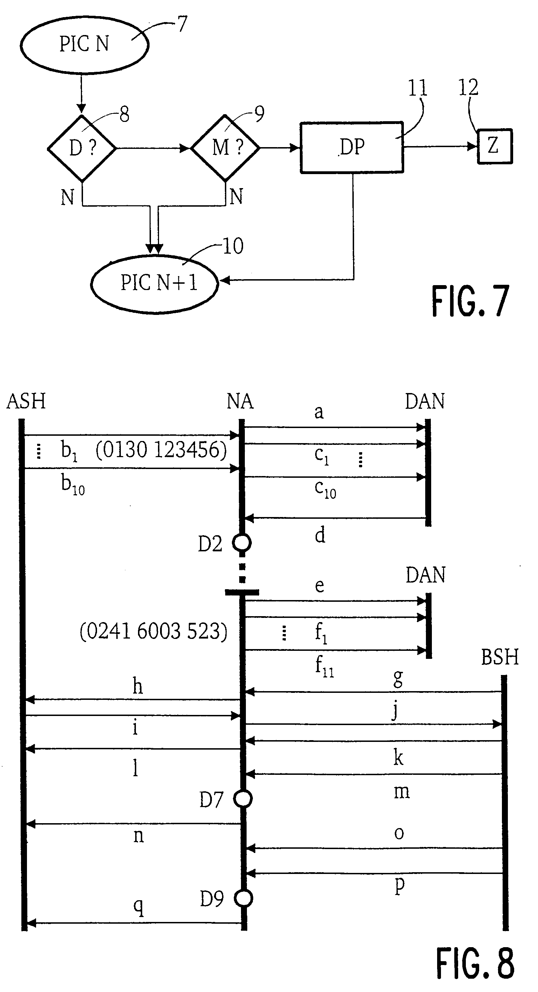

Die Ereignisverarbeitung in der Prozedur ERGE bei Meldungen von der Prozedur NA ist schematisch in der Fig. 7 gezeigt. Der Zustand PIC N (Block 7; Point In Call) stellt einen Zustand der Prozedur NA dar. Eine Meldung von der Prozedur NA wird der Prozedur ERGE als entsprechender Ausstiegspunkt geliefert. Die Prozedur ERGE greift zur weiteren Verarbeitung auf eine Tabelle zu, um die Bedeutung der Ausstiegspunkte für den jeweiligen Teilnehmer interpretieren zu können.

Zuerst überprüft die Prozedur ERGE (Block 8: D?), ob ein entsprechender Dienst aufgerufen werden soll. Beispielsweise soll ein Dienst nur zu bestimmten Zeiten abrufbar sein. Wird der Dienst benötigt, muß überprüft werden, ob der betreffende Teilnehmer schon einen anderen Dienst aufgerufen hat. Ist das nicht der Fall, wird gefragt (Block 9: M?), ob eine Antwort von einem Dienstlogikprogramm erforderlich ist. Wenn dies verneint wird, springt die Prozedur NA ebenso wie bei einer negativen vorhergehenden Überprüfung in den nächste Zustand PIC N + 1 (Block 10). Dem Dienstlogikprogramm wird dann nur die Meldung zugeführt. Wenn eine Antwort von einem Dienstlogikprogramm erforderlich ist wird die Prozedur DP (Block 11) aufgerufen, die eine bestimmte Aktion ausführt. Hierbei kann ein Dienstlogikprogramm gestartet werden oder es werden mit dem Dienstlogikprogramm Meldungen ausgetauscht. Anschließend gibt die Prozedur DP an, in welchen Zustand die Prozedur NA springen sollen. Beispielsweise kann die Bearbeitung beim nächsten Zustand (Block 10: PIC N + 1) oder z.B. beim Zustand AUTH (vergleiche Fig. 5) weitergeführt werden. Den Sprung in einen anderen Zustand als den Zustand PIC N + 1 (Block 10) kennzeichnet in Fig. 7 der Block 12 (Z). Nach einer Zustandsänderung erzeugt die Prozedur NA wenigstens eine Meldung für die Prozedur ASH und gegebenfalls auch eine Meldung für die Prozedur BSH. Eine analoge Ereignisbehandlung ist für die B-seitigen Ereignisse bzw. Meldungen vorgesehen.

Die Prozeduren NA und NB geben jeweils auch Meldungen ab, die für die Prozeduren BSH und ASH zur weiteren Bearbeitung nötig sind. Solche Meldungen sind Antworten auf bestimmte von den Prozeduren ASH bzw. BSH abgegebene Meldungen. Beispielsweise gibt die Prozedur NB die Meldung, daß die B-Seite besetzt ist, von der Prozedur BSH an die Prozedur NA weiter.

Die in Fig. 4 weiter dargestellte Prozedur INT übersetzt mit dem Dienststeuersystem auszutauschende Nachrichten oder Meldungen in das für das Dienststeuerungssystem erforderliche Format. Beispielsweise benötigt eine Dienststeuerungskomponente eines Intelligenten Netzes (IN) andere Meldungstypen als eine CSTA-Steuerungskomponente (Computer-Supported Telecommunication Application). Ein Dienstlogikprogramm, das beispielsweise vom Teilnehmer TA angefordert wird, ist durch die Prozedur SERV in Fig. 4 dargestellt. Ein solches Dienstlogikprogramm liefert dem Vermittlungsystem bestimmte Daten. die von der Prozedur DP (Block 10 in Fig. 7) verarbeitet werden.

Im folgenden soll noch die Meldungsabläufe in den Prozeduren anhand eines Beispiels für einen Dienst mit Hilfe des in der Fig. 8 dargestellten Diagramms näher erläutert werden. Die Fig. 8 bezieht sich auf einen Dienst, bei dem nicht dem Anrufer die Gebühren belastet werden sondern dem Empfänger (Freephone Service). Nachdem ein Teilnehmer TA den Hörer abgenommen hat und nach erfolgreicher Autorisierung, wird dies der Prozedur DAN über eine Meldung a von der Prozedur NA mitgeteilt. Die Prozedur NA hat eine Autorisierungs-Meldung von der Prozedur GEN empfangen. Der Wahlton wird dann aufgeschaltet. Der Teilnehmer TA wählt die Dienstnummer
"0130 123456" (Meldungen b₁ bis b₁₀ und c₁ bis c₁₀), welche die Prozedur ASH der Prozedur DAN über die Prozedur NA zur Ziffernanalyse zuführt. Die Prozedur DAN erkennt, daß unter der gewählten Rufnummer keine Verbindung mit einem Teilnehmer TB hergestellt werden kann (Meldung d). In diesem Fall ist der Ausstiegspunkt D2 erreicht (vergleiche Fig. 5). Die Prozedur ERGE stellt fest, daß ein Dienstlogikprogramm aufgerufen werden muß. Von dem Dienstlogikprogramm erhält die Prozedur ERGE die Meldungen, daß der Teilnehmer TA mit dem Teilnehmer TB, der die Rufnummer "0241 60003 523" besitzt, eine Verbindung hergestellt haben möchte und daß der Teilnehmer TB mit den Gebühren belastet werden soll. Mit der Meldung e von der Prozedur NA an die Prozedur DAN wird mitgeteilt, daß weitere Ziffern folgen. Von der Prozedur NA wird dann mit den Meldungen f₁ bis f₁₁ der Prozedur DAN die Rufnummer geliefert.

Nach Empfang der Rufnummer selektiert die Prozedur DAN einen Teilnehmer TB, der von der Prozedur BSH verwaltet wird. Mit den Meldungen g und h von der Prozedur BSH wird der Prozedur ASH mitgeteilt, daß ein Empfänger selektiert worden ist. Daraufhin erfolgt eine Bestätigung von der Prozedur ASH mit den Meldungen i und j. Die Prozedur BSH erreicht beim Teilnehmer TA die Aufschaltung des Freitons mit den Meldungen k und l. Antwortet der Teilnehmer TB (Hörer abgenommen) wird eine Freigabe-Meldung m zur Prozedur NA gesendet, die den Ausstiegspunkt D7 kennzeichnet. Die Prozedur ERGE liefert dem Dienstlogikprogramm die Information, daß der Teilnehmer TB geantwortet hat. Dies wird auch der Prozedur ASH über die Meldung n mitgeteilt. Die Meldung o dient zur Gebührenberechnung für den Teilnehmer TB und wird von der Prozedur NA unterdrückt. Die Vergebührung übernimmt das Dienstlogikprogramm. Bei diesem Beispiel löst der Teilnehmer TB die Verbindung (Auflegen des Hörers) aus. In diesem Fall wird eine Trennungs-Meldung p von der Prozedur BSH gebildet und der Prozedur NA zugeführt. Die Prozedur ERGE stellt fest, daß der Ausstiegspunkt D9 erreicht ist, und meldet dies dem Dienstlogikprogramm. Die Trennungs-Meldung wird auch als Meldung q der Prozedur ASH zugeführt.

Bei diesem Beispiel haben für die Ausführung des Dienstes die Prozeduren NB und CHA keine Funktion. Die Prozedur NB reicht nur die von der Prozedur BSH abgegebenen Meldungen weiter.

## Patentansprüche

1. Kommunikationssystem mit einem Vermittlungssystem (1), das ein Koppelfeld (2) und eine Steuerschaltung (4) enthält mit
- einer sendeseitigen Verbindungsbehandlungs-Prozedur (ASH) zur Verbindungsverwaltung und zum Austausch von Meldungen mit anderen Prozeduren und
- einer empfangsseitigen Verbindungsbehandlungs-Prozedur (BSH) zur Verbindungsverwaltung und zum Austausch von Meldungen mit anderen Prozeduren,
dadurch gekennzeichnet,
daß das Koppelfeld (2) mit einem Dienststeuerungssystem (6) gekoppelt ist, daß die Steuerschaltung (4) eine Zusatz-Prozedur (ZUSA) zum alleinigen Austausch von Meldungen mit der sendeseitigen und der empfangsseitigen Verbindungsbehandlungs-Prozedur (ASH, BSH) enthält und
daß die Zusatz-Prozedur (ZUSA) bei bestimmten Meldungen zum Austausch von Meldungen mit einem Dienstlogikprogramm (SERV) des Dienststeuerungssystems (6) und in Abhängigkeit der vom Dienstlogikprogramm (SERV) abgegebenen Meldungen zur Ausgabe von Meldungen zur sende- und/oder empfangsseitigen Verbindungsbehandlungs-Prozedur (ASH, BSH) vorgesehen ist.

2. Kommunikationssystem nach Anspruch 1,
dadurch gekennzeichnet,
daß die Zusatz-Prozedur (ZUSA) jeweils eine sende- und empfangsseitige Zustands-Prozedur (NA, NB) zur Ermittlung des Zustandes der sende- und empfangsseitigen Verbindungsbehandlungs-Prozedur (ASH, BSH) anhand der empfangenen Meldungen enthält.

3. Kommunikationssystem nach Anspruch 2,
dadurch gekennzeichnet,
daß die Zusatz-Prozedur (ZUSA) eine Ereignisbehandlungs-Prozedur (ERGE)
- zum Empfang von jeweils einer Meldung einer sende- oder empfangsseitigen Verbindungsbehandlungs-Prozedur (ASH, BSH) kennzeichnenden Ausstiegspunkten und
- zur Überprüfung enthält, ob bei einem Ausstiegspunkt ein Meldungsaustausch mit einem Dienstlogikprogramm (SERV) durchgeführt werden muß.

4. Vermittlungssystem (1) mit einem Koppelfeld (2) und einer Steuerschaltung (4), die
- eine sendeseitige Verbindungsbehandlungs-Prozedur (ASH) zur Verbindungsverwaltung und zum Austausch von Meldungen mit anderen Prozeduren und
- eine empfangsseitige Verbindungsbehandlungs-Prozedur (BSH) zur Verbindungsverwaltung und zum Austausch von Meldungen mit anderen Prozeduren enthält,
dadurch gekennzeichnet,
daß das Koppelfeld (2) mit einem externen Dienststeuerungssystem (6) gekoppelt ist,
daß die Steuerschaltung (4) eine Zusatz-Prozedur (ZUSA) zum alleinigen Austausch von Meldungen mit der sendeseitigen und der empfangsseitigen Verbindungsbehandlungs-Prozedur (ASH, BSH) enthält und
daß die Zusatz-Prozedur (ZUSA) bei bestimmten Meldungen zum Austausch von Meldungen mit einem Dienstlogikprogramm (SERV) des Dienststeuerungssystems (6) und in Abhängigkeit der vom Dienstlogikprogramm (SERV) abgegebenen Meldungen zur Ausgabe von Meldungen zur sende- und/oder empfangsseitigen Verbindungsbehandlungs-Prozedur (ASH, BSH) vorgesehen ist.
